# FASCICULE DE BREVET EUROPEEN

(11) **EP 2 888 510 B1**
(45) Date de publication et mention de la délivrance du brevet: **01.03.2017**
(21) Numéro de dépôt: 13747474.8
(22) Date de dépôt: 22.07.2013
(51) Int. Cl.: F16H 57/05, F02B 67/06, F16C 33/10, F16C 33/04

(54) **GICLEUR DE LUBRIFICATION DE CHAINE DE DISTRIBUTION**
DÜSE ZUM SCHMIEREN EINER STEUERKETTE
NOZZLE FOR LUBRICATING A TIMING CHAIN

(30) Priorité: 24.08.2012 FR 1257987
(43) Date de publication de la demande: 01.07.2015
(73) Titulaire: Renault S.A.S., 92100 Boulogne-Billancourt (FR)
(72) Inventeur: MILLON, Jean-Pierre, F-78870 Bailly (FR); DAUBERCIES, Florent, F-78230 Le Pecq (FR); NIFENECKER, Arnaud, F-75018 Paris (FR)
(86) Numéro de dépôt international: PCT/FR2013/051762
(87) Numéro de publication internationale: WO 2014/029927

(56) Documents cités:
- EP-A1- 1 302 679
- US-A- 4 974 561

## Description

### Domaine technique de l'invention

La présente invention se rapporte au domaine des véhicules automobiles et concerne notamment la lubrification de chaîne de distribution de moteur à combustion interne de véhicule automobile

L'invention concerne plus particulièrement des éléments de palier de vilebrequin ou d'arbres à cames de moteur à combustion interne de véhicule automobile.

### Etat de la technique

La distribution regroupe les éléments assurant l'admission et l'échappement des gaz dans les cylindres d'un moteur à combustion interne dont les principaux composants sont l'arbre à cames, les soupapes ou encore la courroie de distribution. En remplacement de ladite courroie, certains moteurs sont pourvus d'une chaîne de distribution qui présente l'avantage d'une durée de vie sensiblement égale à celle du moteur en contrepartie d'une bonne lubrification.

Pour lubrifier ladite chaine, il est connu d'agencer des moyens de lubrification comportant des gicleurs dont la buse est dirigée vers un élément de la chaîne, lesdits moyens étant connectés à un circuit d'huile sous pression de lubrification ou de refroidissement des éléments du moteur.

La publication DE102006058429 divulgue un dispositif de lubrification de chaine de distribution comportant une buse dirigée vers ladite chaine et connectée au circuit d'huile du moteur. La mise en place de ladite buse et sa connexion au circuit d'huile par un circuit d'amenée d'huile est sensiblement complexe.

La publication US4974561 divulgue un dispositif de lubrification de chaine de distribution comportant un orifice dirigé vers ladite chaine, creusé dans une culasse et connecté à une rainure circulaire agencée dans un arbre à cames. L'huile est amenée depuis un circuit d'huile par ledit arbre à cames et débouche de l'orifice pour être projetée vers ladite chaîne. Le conduit de circulation d'huile dans la culasse peut être obtenu par moulage. Le jet d'huile obtenu est sensiblement diffus vers la chaîne de distribution.

La mise en place de ces dispositifs est donc complexe et nécessite des aménagements sur plusieurs éléments du moteur.

Lesdits dispositifs sont implantés depuis des arbres à cames et le jet d'huile est diffus entrainant une moindre performance de la lubrification de la chaîne.

### Bref résumé de l'invention

Un des buts de l'invention est de pallier ces inconvénients et l'invention a pour objet un dispositif simple de lubrification de chaine de distribution aménagé à une extrémité d'un arbre mobile en rotation, peu couteux et permettant d'obtenir un jet d'huile plus compact que dans l'art antérieur.

L'objet de l'invention propose plus particulièrement par un dispositif de lubrification de chaîne de distribution de véhicule automobile comprenant :
- un palier comportant deux éléments de palier de surface intérieure semi-cylindrique fixés l'un à l'autre selon une surface de contact et aptes à entourer un arbre mobile en rotation, à une extrémité duquel est fixée une roue dentée comportant une paroi radiale et entourée par la chaîne, au moins un desdits éléments de palier comportant une rainure circulaire de circulation d'huile sur sa surface semi-cylindrique intérieure,
caractérisé en ce que la surface de contact dudit au moins un élément de palier comporte une rainure de projection d'huile sensiblement parallèle à l'axe de l'arbre, débouchant de l'élément de palier et connectée à la rainure circulaire de circulation d'huile.

Selon d'autres caractéristiques avantageuses de l'invention,
- la rainure de projection d'huile est dirigée vers la paroi du pignon, la réalisation de cette rainure est donc simple ;
- la section de la rainure de projection est sensiblement inférieure à la section de la rainure de circulation d'huile, le débit d'huile prélevé pour la lubrification de la chaîne est faible et ne perturbe pas la lubrification du moteur ;
- la rainure de projection comporte une section rétrécie en débouché de l'élément de palier, le jet d'huile est donc plus compact pour atteindre la cible ;
- la rainure de projection comporte une portion en aval sensiblement conique en débouché de l'élément de palier, le jet d'huile est plus compact et mieux dirigé pour atteindre la cible ;
- la rainure de projection entoure un orifice de passage de fixation de vis de fixation, de l'huile de lubrification passant par les orifices de fixation de palier participe également à la lubrification de la chaîne ;
- l'arbre est un arbre à cames ou un vilebrequin, le dispositif peut être réalisé sur des éléments de palier de vilebrequin et/ou d'arbre à cames pour la lubrification de la chaîne qui permet la transmission des mouvements de rotation du vilebrequin à l'arbre à cames.

### Brève description des figures

La figure 1 est une vue schématique d'une extrémité d'un arbre à cames.
La figure 2 est une vue schématique de coupe de dessus d'un élément de palier.

### Description détaillée des figures

Les descriptions qui suivent se réfèrent à l'axe longitudinal X.

Les descriptions qui suivent se réfèrent à un arbre à cames de moteur à combustion interne de véhicule automobile mais l'invention peut sans modification être portée par d'autres organes du moteur tels que l'arbre de vilebrequin, ou de boite de vitesse ou de compresseur.

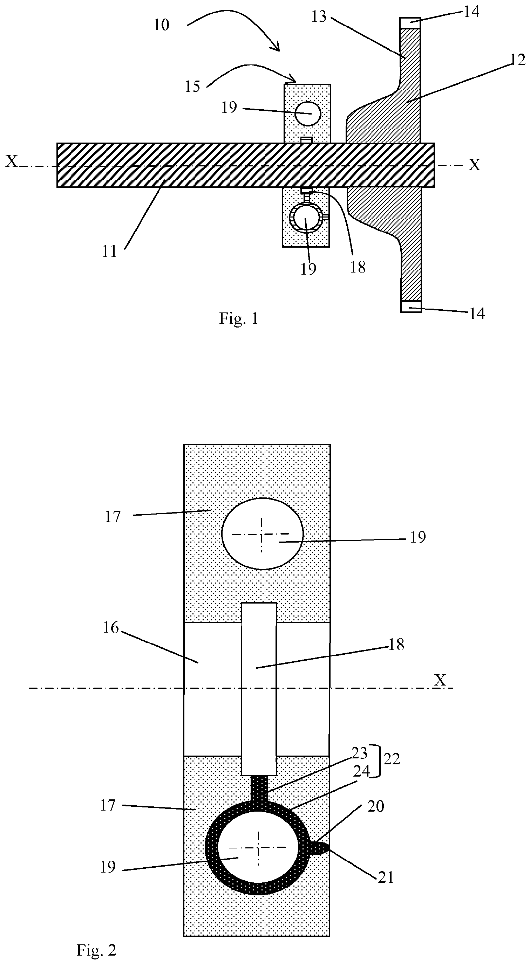

Selon la figure 1, un arbre à cames 11 est monté mobile en rotation selon un axe longitudinal X dans une chambre dans une culasse (non représentée) d'un moteur à combustion interne de véhicule automobile (non représenté).

A un bord de l'arbre est fixée solidaire une roue dentée 12 comportant une paroi radiale circulaire 13 à la circonférence de laquelle sont disposées des dentures 14. Ladite roue dentée est entourée par une chaîne de distribution (non représentée) dont l'objet est de transmettre à au moins un arbre à cames les déplacements en rotation d'un arbre de vilebrequin (non représenté) disposé selon un axe sensiblement parallèle à l'axe longitudinal X et comportant également une roue dentée (non représentée) entourée aussi par ladite chaîne.

Ledit arbre est maintenu dans ladite chambre par au moins un palier disposé à une extrémité de l'arbre à proximité de la roue dentée 12 et sensiblement plus vers le centre de l'arbre. Ledit palier comporte deux éléments 15 de palier comprenant chacun une surface 16 sensiblement semi-cylindrique intérieure, et complémentaire adaptées pour entourer ledit arbre. Au moins un des deux éléments 15 comporte sur ladite surface semi-cylindrique une rainure circulaire 18 de circulation d'huile connectée avec un circuit d'huile sous pression (non représenté) pour assurer la lubrification de la surface extérieure de l'arbre à cames 11 en contact avec l'élément de palier 15.

Selon la figure 2, l'élément de palier 15 comprend deux surfaces 17 diamétralement opposées de contact avec le deuxième élément de palier. Ladite surface de contact 17 comporte un orifice de passage 19 pour une vis de fixation (non représentée).

Au moins une surface de contact 17 comporte une rainure 20 de projection sensiblement parallèle à l'axe du palier parallèle à l'axe de l'arbre X quand le palier entoure ledit arbre en position montée et débouchant de l'élément de palier 15 en regard avec la paroi radiale 13 de la roue dentée 12. La rainure de projection 20 comporte de manière préférentielle une embouchure 21 sensiblement conique, la section de l'ouverture vers l'extérieur de l'élément de palier étant sensiblement réduite par rapport à la section de passage de la rainure de projection 20 en amont de l'embouchure.

Ladite rainure 20 est connectée au circuit de lubrification d'huile selon un mode de réalisation présenté en figure 2 via une deuxième rainure 22 comprenant une première partie 23 sensiblement orthogonale à la rainure de projection 20 et une seconde partie 24 entourant l'orifice de passage 19 de vis de fixation. Ladite première partie débouche dans la rainure circulaire de circulation d'huile 18. Le circuit d'huile peut également passer par l'orifice de passage de vis 19. La section transversale de la rainure de projection est sensiblement inférieure à la section transversale de la rainure de circulation d'huile 18. Les dimensions de la rainure de projection 20 et de la deuxième rainure 22 sont sensiblement identiques avec une largeur et/ou profondeur de manière préférentielle comprise entre 0,3 mm et 2 mm. Le débit d'huile s'écoulant dans ladite rainure est de l'ordre de 0,2 à 4 l/mn.

Les rainures sont obtenues de façon préférentielle par usinage ou par moulage.

En position montée, l'huile de lubrification passe par la rainure circulaire 18, puis par la deuxième rainure 22 pour rejoindre la rainure de projection 20. La deuxième partie 22 autour le l'orifice de fixation 19 permet aussi de ramener une partie de l'huile venant du palier. L'huile va ensuite déboucher du palier pour être projetée contre la paroi radiale 13 de la roue dentée 12. La forme conique de l'embouchure 21 de la rainure de projection 20 permet d'obtenir une vitesse d'éjection suffisamment importante et un jet d'huile sensiblement orienté vers la paroi radiale 13 de la roue dentée, le jet est sensiblement compact et non pas diffus, pour parvenir jusqu'à ladite paroi. L'huile alors déposée sur la paroi radiale de la roue dentée qui en tournant l'entraine par la force centrifuge vers les dentures 14 en contact avec la chaîne de distribution, ce qui permet une lubrification de ladite chaîne.

L'objectif de l'invention est atteint : la rainure de projection 20 est alimentée en huile depuis le circuit de lubrification ou de refroidissement du moteur et permet d'obtenir un jet d'huile compact et dirigé vers une paroi 13 de la roue dentée, l'huile étant ensuite dirigée au contact avec la chaîne de distribution pour permettre la lubrification de ladite chaîne. Le mode de réalisation est simple et peu couteux.

L'invention n'est pas réduite au mode de réalisation présenté précédemment et d'autres modes de réalisation peuvent être suggérés dans l'esprit de l'homme du métier par exemple en réduisant le parcours de la deuxième rainure pour pouvoir réguler le débit d'huile de lubrification de la chaîne.

## Revendications

1. Dispositif de lubrification de chaîne de distribution de véhicule automobile comprenant :
- un palier comportant deux éléments de palier (15) de surface intérieure (16) semi-cylindrique et fixés l'un à l'autre selon une surface de contact (17) aptes à entourer un arbre (11) mobile en rotation à une extrémité duquel est fixée une roue dentée (12) comportant une paroi radiale (13) et entourée par la chaîne,
**caractérisé en ce que** au moins un desdits éléments de palier (15) comportant une rainure circulaire (18) de circulation d'huile sur sa surface semi-cylindrique intérieure (16),
et **en ce que** la surface de contact (17) dudit au moins un élément de palier (15) comporte une rainure de projection (20) d'huile sensiblement parallèle à l'axe (X) de l'arbre, débouchant de l'élément de palier (15) et connectée à la rainure circulaire (18) de circulation d'huile.

2. Dispositif de lubrification de chaîne selon la revendication 1, **caractérisé en ce que** la rainure de projection (20) est dirigée vers la paroi radiale (13) de la roue dentée (12).

3. Dispositif de lubrification de chaîne selon la revendication 1 ou 2, **caractérisé en ce que** la section de la rainure de projection (20) est inférieure à la section de la rainure de circulation d'huile (18).

4. Dispositif de lubrification de chaîne selon la revendication 3, **caractérisé en ce que** la rainure de projection (20) comporte une section rétrécie en débouché de l'élément de palier.

5. Dispositif de lubrification de chaîne selon la revendication 4, **caractérisé en ce que** la rainure de projection (20) comporte une embouchure (21) conique en débouché de l'élément de palier.

6. Dispositif de lubrification de chaîne selon la revendication 5, **caractérisé en ce que** la rainure de projection (20) est connectée à la rainure circulaire (18) de circulation d'huile par une deuxième rainure (22) entourant un orifice de passage (19) de vis de fixation.

7. Dispositif de lubrification de chaîne selon l'une quelconque des revendications 1 à 6, **caractérisé en ce que** l'arbre mobile en rotation est compris dans une liste comprenant un arbre à cames, un vilebrequin, un arbre de compresseur, un arbre de boîte de vitesse.

## Patentansprüche

1. Schmiervorrichtung einer Steuerkette eines Kraftfahrzeugs, die enthält:
- ein Lager, das zwei Lagerelemente (15) mit halbzylindrischer Innenfläche (16) aufweist, die aneinander gemäß einer Kontaktfläche (17) befestigt sind und eine drehbewegliche Welle (11) umgeben können, an deren einem Ende ein Zahnrad (12) befestigt ist, das eine radiale und von der Kette umgebene Wand (13) aufweist,
**dadurch gekennzeichnet, dass** mindestens eines der Lagerelemente (15) eine Ölumlauf-Ringnut (18) auf seiner halbzylindrischen Innenfläche (16) aufweisend,
und dass die Kontaktfläche (17) des mindestens einen Lagerelements (15) eine Ölspritznut (20) im Wesentlichen parallel zur Achse (X) des Lagers aufweist, die vom Lagerelement (15) mündet und mit der Ölumlauf-Ringnut (18) verbunden ist.

2. Kettenschmiervorrichtung nach Anspruch 1, **dadurch gekennzeichnet, dass** die Spritznut (20) zur radialen Wand (13) des Zahnrads (12) gerichtet ist.

3. Kettenschmiervorrichtung nach Anspruch 1 oder 2, **dadurch gekennzeichnet, dass** der Querschnitt der Spritznut (20) kleiner ist als der Querschnitt der Ölumlaufnut (18).

4. Kettenschmiervorrichtung nach Anspruch 3, **dadurch gekennzeichnet, dass** die Spritznut (20) einen verengten Querschnitt an der Mündung des Lagerelements aufweist.

5. Kettenschmiervorrichtung nach Anspruch 4, **dadurch gekennzeichnet, dass** die Spritznut (20) eine konische Einmündung (21) an der Mündung des Lagerelements aufweist.

6. Kettenschmiervorrichtung nach Anspruch 5, **dadurch gekennzeichnet, dass** die Spritznut (20) mit der Ölumlauf-Ringnut (18) durch eine zweite Nut (22) verbunden ist, die eine Durchgangsöffnung (19) einer Befestigungsschraube umgibt.

7. Kettenschmiervorrichtung nach einem der Ansprüche 1 bis 6, **dadurch gekennzeichnet, dass** die drehbewegliche Welle in einer Liste enthalten ist, die eine Nockenwelle, eine Kurbelwelle, eine Verdichterwelle, eine Getriebewelle enthält.

## Claims

1. Device for lubricating a timing chain of a motor vehicle, comprising:
- a bearing comprising two bearing elements (15) which have a semi-cylindrical inner surface (16), which are fastened to one another along a contact surface (17), and which are capable of surrounding a rotatably moveable shaft (11), at one end of which is fixed a sprocket (12) comprising a radial wall (13) and surrounded by the chain, **characterized in that** at least one of said bearing elements (15) comprising an oil-circulation circular groove (18) on its inner semi-cylindrical surface (16), and **in that**
the contact surface (17) of said at least one bearing element (15) comprises an oil-spraying groove (20) which is substantially parallel to the axis (X) of the shaft, which emerges from the bearing element (15), and which is connected to the oil-circulation circular groove (18).

2. Chain-lubricating device according to Claim 1, **characterized in that** the spraying groove (20) is directed toward the radial wall (13) of the sprocket (12).

3. Chain-lubricating device according to Claim 1 or 2, **characterized in that** the cross section of the spraying groove (20) is smaller than the cross section of the oil-circulation groove (18).

4. Chain-lubricating device according to Claim 3, **characterized in that** the spraying groove (20) comprises a narrowed cross section at the point where it emerges from the bearing element.

5. Chain-lubricating device according to Claim 4, **characterized in that** the spraying groove (20) comprises a conical mouth (21) at the point where it emerges from the bearing element.

6. Chain-lubricating device according to Claim 5, **characterized in that** the spraying groove (20) is connected to the oil-circulation circular groove (18) by a second groove (22) surrounding a fastening-screw passage orifice (19).

7. Chain-lubricating device according to any one of Claims 1 to 6, **characterized in that** the rotatably moveable shaft is selected from a list comprising a camshaft, a crankshaft, a compressor shaft, and a gearbox shaft.
